# EUROPEAN PATENT SPECIFICATION

(11) **EP 3 964 754 B1**
(45) Date of publication and mention of the grant of the patent: **07.05.2025**
(21) Application number: 21194984.7
(22) Date of filing: 06.09.2021
(51) Int. Cl.: F25B 13/00, F25B 25/00, F25B 27/02, F24F 1/0003, F24F 1/28, F24F 1/32, F24F 1/44, F24F 1/40, F24F 1/46, F24F 11/89, F25B 31/00, F24F 1/12, F24F 1/56

(54) **AIR CONDITIONER**
KLIMAANLAGE
CLIMATISEUR

(30) Priority: 07.09.2020 KR 20200113760
(43) Date of publication of application: 09.03.2022
(73) Proprietor: LG Electronics Inc., SEOUL 07336 (KR)
(72) Inventor: YUN, Jinho, 08592 Seoul (KR); KIM, Jiwon, 08592 Seoul (KR); LEE, Heebeom, 08592 Seoul (KR)
(74) Representative: Vossius & Partner Patentanwälte Rechtsanwälte mbB

(56) References cited:
- EP-A1- 3 081 870
- EP-A1- 3 153 784
- JP-A- 2003 074 912
- JP-A- S6 283 594
- JP-B2- H0 749 875
- KR-A- 20190 051 347
- US-A1- 2016 178 290

## Description

The present invention relates to an air conditioner and, more particularly, to an air conditioner for running a compressor by an engine.

An air conditioner is a device that cools or heats a room by using a heat pump cycle including a compressor, an outdoor heat exchanger, an expansion device, and an indoor heat exchanger.

The compressor needs to be run in order to circulate refrigerant in the heat pump cycle, and the air conditioner can be classified into EHP (electric heat pump) type and GHP (gas engine-driven heat pump) type depending on the method of running the compressor.

In the GHP type, the compressor is run by using an engine fueled by gas. The GHP type is suitable for industrial use or large buildings because of its low fuel costs and potentially large heating and cooling capacity.

Korean Unexamined Patent Publication KR 10-2019-0051347 discloses a GHP-type air conditioner. Notably, the air conditioner of this document discloses a structure in which the engine and the compressor are configured in a single unit, along with a plurality of components such as the outdoor heat exchanger and a heat radiator. The engine, which produces power using the explosive force of combustion of fuel gas, causes relatively high levels of vibration and noise and generates heat itself, which may affect the performance or durability of other components including the outdoor heat exchanger. Especially in the case of heat exchangers, in which a plurality of refrigerant tubes are interconnected, when the vibration coming from the engine is transmitted directly to them, the connecting portions of the refrigerant tubes may be damaged or gaps may be formed between them.

Moreover, a configuration that supplies fuel from engine to engine or emits burned gas takes up a large volume, and therefore may narrow the space occupied by compressor-related components or components through which water flows.

Another issue is that the outdoor unit of the GHP is usually installed on a rooftop of a building. The outdoor unit, with the engine placed inside, is quite hard to lift and transport because of its heavy weight. Also, the outdoor unit may have some limitations on installation because it puts an excessive load in a confined area.

JP 2003 074912 A discloses an engine-driven type heat pump apparatus. KR 2019 0051347 A discloses an outdoor unit of a gas heat pump system which comprises:
an upper unit having an upper frame accommodating a compressor and an outdoor heat exchanger, and an upper base connected to a lower portion of the upper frame;
and a lower unit disposed in a lower portion of the upper unit and accommodating an engine module having an engine for burning a mixed gas mixed with a fuel and air to provide a power for operating the compressor. Document JP H07 49875 B2 discloses an air conditioner according to the preamble of claim 1.

The present invention, hereafter referred to as disclosure, is defined in claim 1. The present disclosure provides an air conditioner that minimizes vibration from an engine from being transmitted to heat pump components other than a compressor. Particularly, the present disclosure provides an air conditioner that enhances the reliability of an outdoor heat exchanger, in that contact portions where refrigerant tubes are distributed or joined are susceptible to damage from vibration.

The present disclosure also provides an air conditioner that provides an efficient configuration of components included in an outdoor unit of the air conditioner. Particularly, the present disclosure provides an air conditioner that provides an efficient configuration of space for the outdoor unit, by placing engine-related components and the other components in separate spaces, one of which being the space for running the compressor, and the other being the space for transferring heat.

The present disclosure also provides an air conditioner that allows for easy inspection and repair by a mechanic by placing a control box and a connector near a panel, since the control box is a component of the outdoor unit that needs to be serviced the most and the connector connects a control box, refrigerant tubes, and water tubes.

The present disclosure also provides an air conditioner with a plurality of outdoor units that can reduce the expenses of manufacturing casings forming the exterior of the outdoor units or improve the speed of production of them by making the casings equal in size.

The aspects of the present disclosure are not limited to the aforementioned ones, and other aspects, which are not mentioned above, will be apparent to a person having ordinary skill in the art from the following description.

An exemplary embodiment of the present disclosure provides an air conditioner according to claim 1. In particular, it comprises:
a first outdoor unit including an engine that runs by the combustion of a gas fuel and a compressor that operates when the engine is running;
at least one indoor unit including an indoor heat exchanger for transferring heat between the air in a room and refrigerant discharged from the compressor; and a second outdoor unit including an outdoor heat exchanger that is placed apart from the first outdoor unit and transfers heat between outside air and the refrigerant discharged from the compressor, and a switching valve that sends the refrigerant released from the compressor to the outdoor heat exchanger or the indoor heat exchanger, wherein the first outdoor unit, the second outdoor unit, and the indoor unit are placed separately.

Furthermore, the air conditioner according to the present disclosure comprises:
a first outer refrigerant tube that is exposed on the outside of the first outdoor unit and the second outdoor unit and connects the compressor and the switching valve; and an outer water tube that is exposed on the outside of the first outdoor unit and second outdoor unit and connected to the engine, whereby the first outdoor unit and the second outdoor unit are connected, and also may comprise a second outer refrigerant tube that is exposed on the outside of the second outdoor unit and indoor unit and connects the switching valve and the indoor heat exchanger, whereby the second outdoor unit and the indoor unit are connected.

With this configuration, refrigerant may be distributed to the indoor heat exchanger or the outdoor heat exchanger through the second outdoor unit. Also, it is possible to minimize the vibration caused by the running of the engine placed in the first outdoor unit from being transmitted to the second outdoor unit, since the first outdoor unit and the second outdoor unit are placed separately.

The length of the first outer refrigerant tube exposed on the outside of the first outdoor unit and second outdoor unit may be equal to or greater than the length of the outer water tube exposed on the outside of the first outdoor unit and second outdoor unit. The length of the outer water tube may be set in consideration of the performance of the water pump.

The length of the first outer refrigerant tube exposed on the outside of the first outdoor unit and second outdoor unit may be less than the length of the second outer refrigerant tube exposed on the outside of the first outdoor unit and second outdoor unit. The first outdoor unit and the second outdoor unit are placed adjacent to each other, and the second outdoor unit and the indoor unit are placed in different spaces.

The first outer refrigerant tube and the outer water tube have at least one bending portion, thereby alleviating the vibration transmitted to the second outdoor unit through the first outer refrigerant tube and the outer water tube.

The air conditioner may further comprise a water pump that is placed in the first outdoor unit or the second outdoor unit and supplies water to the engine.

The second outdoor unit may comprise: a heat radiator that transfers heat between outside air and water caused to flow by means of the water pump; a plate-type heat exchanger that transfer heat between refrigerant and the water caused to flow by means of the water pump; and a water valve that sends the water caused to flow by means of the water pump to the heat radiator or the plate-type heat exchanger. That is, components for transferring heat with water caused to flow by means of the water pump is placed in the second outdoor unit. This minimizes the vibration being transmitted from the engine. Also, the water pump, the plate-type heat exchanger, and heat radiator may be placed in separate spaces.

The first outdoor unit comprises a first casing that forms the exterior and creates a space within where the engine and the compressor are placed, and the second outdoor unit comprises a second casing that forms the exterior and creates a space within where the outdoor heat exchanger and the water pump are placed. The first casing and the second casing may have the same size. The first casing and the second casing may be produced together in a single process since the first casing and the second casing are made equal in size.

The first casing may comprise: a first base covering the bottom; a first peripheral panel placed above the first base and covering the periphery; and a first upper panel placed over the first peripheral panel and forming an exhaust opening.

The first outdoor unit may comprise: an engine frame that secures the engine and the compressor; and a damper that is secured to the engine frame and the first base and alleviates vibration caused by the engine. The vibration generated from the engine may be alleviated through the engine frame and the damper.

The first base may comprise: a first base panel; a first base support placed below the first base panel, for placing the first base panel some distance above the ground; and a first base frame placed on top of the first base panel, where some of the components are secured. The damper may be secured in place to the first base frame, thereby alleviating the vibration from the engine.

The first base frame may have a roughly Π-shaped cross section, with two opposite edges being secured to the first base panel, thereby alleviating the vibration from the engine.

The first casing comprises a plurality of first peripheral panels placed around four sides perpendicular to a vertical direction, the plurality of first peripheral panels including a first service panel where a first connector is placed. The first outer refrigerant tube and the outer water tube are connected to the first connector. A first control box is placed inside the first service panel, for regulating the operation of the engine or compressor, whereby the first control box and the first connector may be managed through the first service panel.

The first control box may be fixed in place on an upper portion of the first service panel so as to be spaced apart from the engine, thereby minimizing the heat generated from the engine from being transmitted to the first control box.

The second outdoor unit may comprise: a second casing that forms the exterior that has an intake opening on the periphery and a discharge opening on the top; and a blower fan that sends the air inside the second casing to the discharge opening. The outdoor heat exchanger may be placed inside the intake opening, and the blower fan may be placed above the outdoor heat exchanger, thereby allowing the air blown by the blower fan to pass through the outdoor heat exchanger placed below it and flow upward. Moreover, the outdoor heat exchanger may be placed under the blower fan so that the center of gravity of the second outdoor unit is placed under the blower fan.

The second casing may comprise: a second base covering the bottom; a second peripheral panel placed vertically above the second base to cover the periphery and forming the intake opening; and a second upper panel placed over the second peripheral panel and forming the discharge opening.

The second outdoor unit may comprise: an oil separator placed inside the second casing that separates oil from the refrigerant discharged from the compressor; and an accumulator placed inside the second casing that supplies vapor refrigerant to the compressor. The accumulator and the oil separator may be fixed in place to the second base, thereby placing the center of gravity of the second outdoor unit in a lower position.

The second casing comprises a plurality of second peripheral panels placed around four sides perpendicular to a vertical direction, the plurality of second peripheral panels including a second service panel. A second connector is placed on the second service panel, with the second outer refrigerant tube and the outer water tube being connected to the second connector. A second control box may be placed inside the second service panel, for regulating the operation of the water pump or blower fan, whereby the second control box and the second connector may be managed through the second service panel.

The second control box may be fixed in place on an upper portion of the second service panel, thereby forming a massive air of flow around the second control box by means of the blower fan placed in an upper position.

Details of other exemplary embodiments are included in the detailed description and the accompanying drawings.

### BRIEF DESCRIPTION OF THE DRAWINGS

FIG. 1 is a system diagram of an air conditioner according to an exemplary embodiment of the present disclosure.
FIG. 2 is a perspective view of a first outdoor unit and a second outdoor unit of the air conditioner according to an exemplary embodiment of the present disclosure.
FIG. 3 is a front view of a first outdoor unit and a second outdoor unit of an air conditioner according to an exemplary embodiment of the present disclosure.
FIG. 4 is a rear perspective view of a first outdoor unit according to an exemplary embodiment of the present disclosure.
FIG. 5 is a front view of a first outdoor unit according to an exemplary embodiment of the present disclosure.
FIG. 6 is a rear perspective view of a first outdoor unit according to an exemplary embodiment of the present disclosure from which a peripheral panel is removed.
FIG. 7 is a front perspective view of a first outdoor unit according to an exemplary embodiment of the present disclosure from which a peripheral panel is removed.
FIG. 8 is a side view of a first outdoor unit according to an exemplary embodiment of the present disclosure from which a top cover and a frame are removed.
FIG. 9 is a plan view of a first outdoor unit according to an exemplary embodiment of the present disclosure form which a peripheral panel, a top cover, and a frame are removed.
FIG. 10 is a rear perspective view of a second outdoor unit according to an exemplary embodiment of the present disclosure.
FIG. 11 is a front view of a second outdoor unit according to an exemplary embodiment of the present disclosure.
FIG. 12 is a front perspective view of a second outdoor unit according to an exemplary embodiment of the present disclosure from which a peripheral panel is removed.
FIG. 13 is a front perspective view of a second outdoor unit according to an exemplary embodiment of the present disclosure from which a peripheral panel, an upper panel, and a blower fan are removed.
FIG. 14 is a plan view of a second outdoor unit according to an exemplary embodiment of the present disclosure from which a peripheral panel, an upper panel, and a blower fan are removed.
FIG. 15 is a rear view of a second outdoor unit according to an exemplary embodiment of the present disclosure from which a peripheral panel, an upper panel, a blower fan, an outdoor heat exchanger, and a heat radiator are removed.
FIG. 16 is a front perspective view of a second outdoor unit according to an exemplary embodiment of the present disclosure from which a peripheral panel, an upper panel, a blower fan, an outdoor heat exchanger, and a heat radiator are removed.
FIG. 17 is a view illustrating the relationship between a first outer refrigerant tube and an outer water tube according to an exemplary embodiment of the present disclosure.
FIG. 18 is a system diagram of an air conditioner according to another exemplary embodiment of the present disclosure.

Advantages and features of the disclosure and methods of accomplishing the same may be understood more readily by reference to the following detailed descriptions of the embodiments and the accompanying drawings. In this regard, the disclosure may, however, be embodied in many different forms and should not be construed as being limited to the embodiments set forth herein. Rather, these embodiments are provided so that this disclosure will be thorough and complete and will fully convey the concept of the embodiments to one of ordinary skill in the art. Like reference numerals indicate like elements throughout the specification.

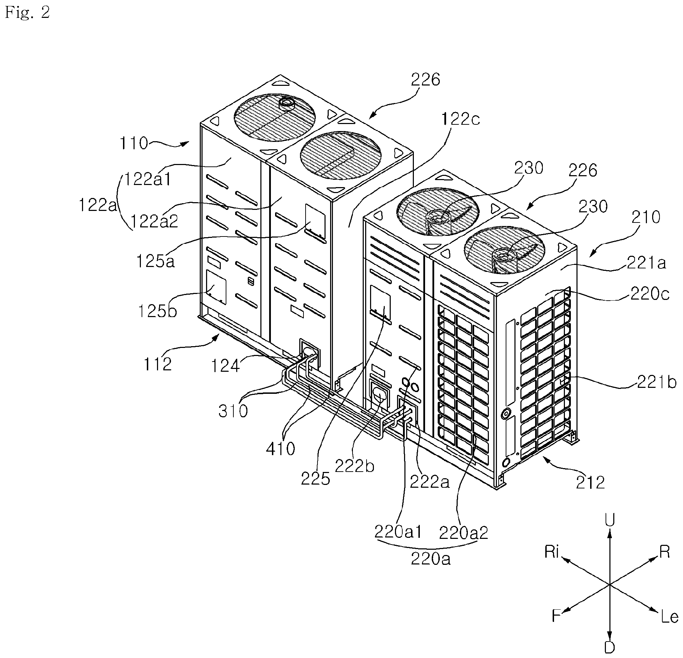

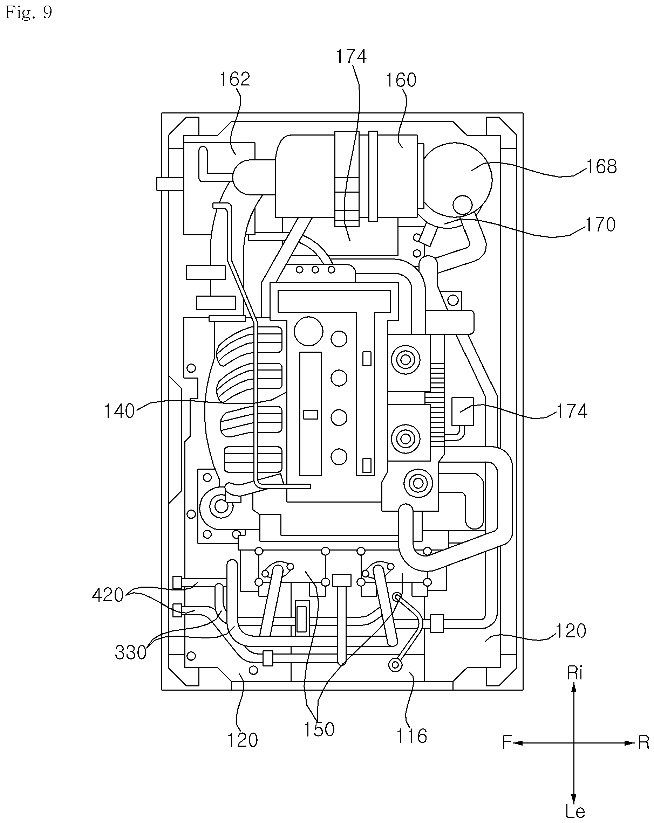

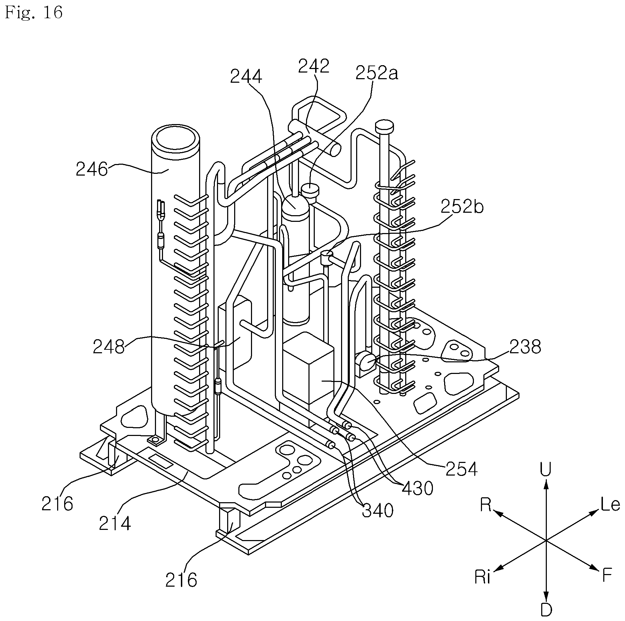

Terms indicating directions such as front (F), rear (R), left (Le), right (Ri), up (U), and down (D) shown in FIGS. 2 to 18 are for the convenience of explaining the air conditioner according to exemplary embodiments of the present disclosure. Thus, these directions shall be interpreted based on the orientation of the object.

Hereinafter, the present disclosure will be described with reference to the drawings which are provided to describe an air conditioner according to exemplary embodiments of the present disclosure.

### <Overall Configuration>

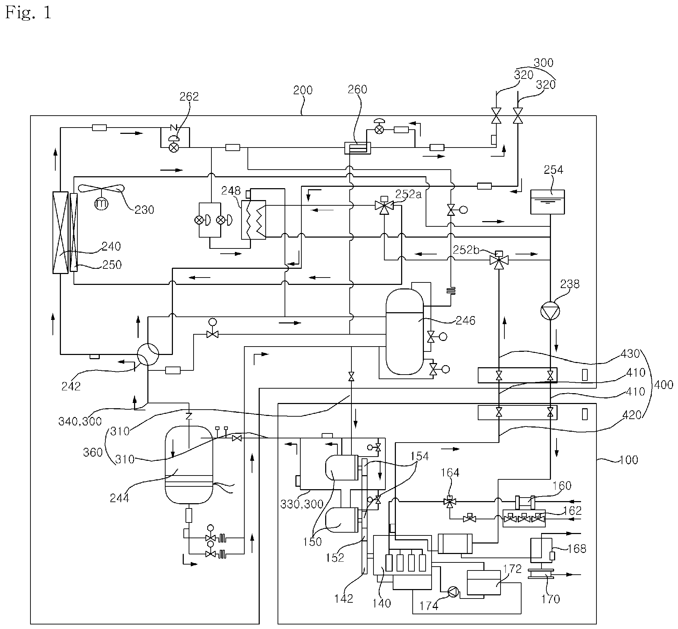

Referring to FIG. 1, an air conditioner according to the present disclosure includes a first outdoor unit 100 for running an engine 140 and a compressor 150 on a gas fuel, a second outdoor unit 200 for transferring heat between outside air and refrigerant discharged from the compressor 150 or transferring heat between outside air or refrigerant and water for cooling the engine 140, water tubes 400 connecting the first outdoor unit 100 and the second outdoor unit 200, through which water flows, and a first outer refrigerant tube (or first refrigerant tube) 310 connecting the first outdoor unit 100 and the second outdoor unit 200, through which refrigerant flows.

The air conditioner according to the present disclosure includes at least one indoor unit (not shown) connected to the second outdoor unit 200 and a second outer refrigerant tube (or second refrigerant tube) 320 connecting the second outdoor unit 200 and the indoor unit, through which refrigerant flows.

The first outdoor unit 100 and the second outdoor unit 200 are placed apart from each other. The first outdoor unit 100 and the second outdoor unit 200 are connected by the first outer refrigerant tube 310 and the water tubes 400. Thus, it is possible to minimize the vibration caused by the running of the engine 140 and compressor 150 included in the first outdoor unit 100 from being transmitted to the second outdoor unit 200.

### <First Outdoor Unit>

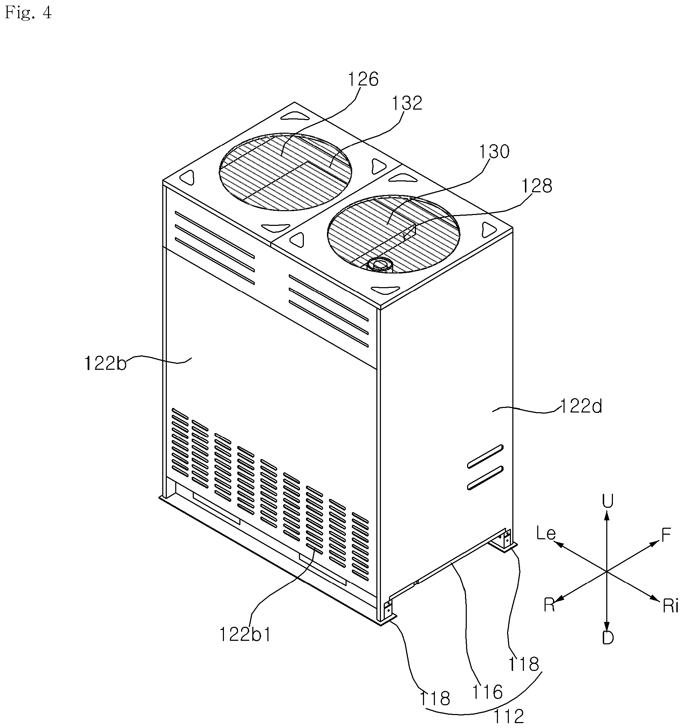

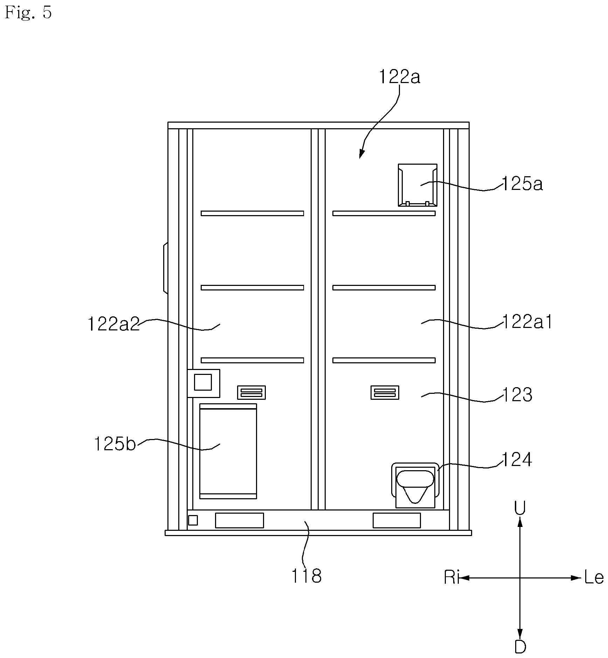

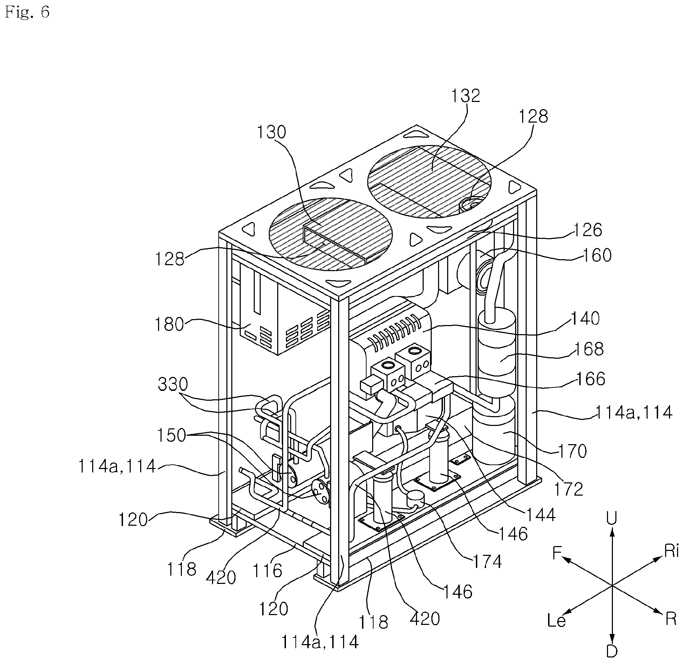

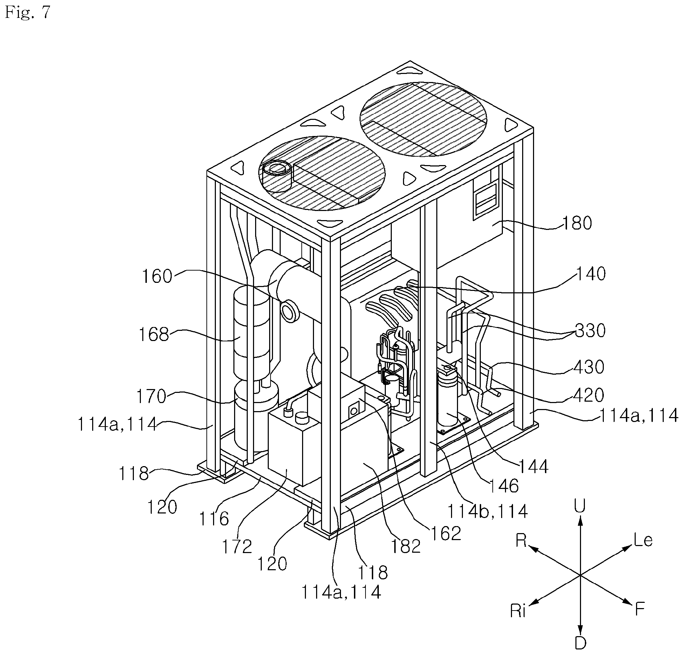

The first outdoor unit 100 includes an engine 140 (see FIGS. 6 and 7) which runs by the combustion of a gas fuel, a compressor 150 (see FIG. 6) connected to the engine 150 by a belt 152, for compressing refrigerant, and a first casing 110 (see FIGS. 4 and 5) forming an internal space where the engine 140 and the compressor 150 are placed.

The first casing 110 may include a first base 112 (see FIG. 4) covering the bottom, first frames 114 (see FIG. 6) placed vertically upward from the first base 112 and forming a framework, a first peripheral panel 122 (see FIG. 4) placed above the first base 112 and connected to the first frames 114 to cover the periphery, and a first upper panel 126 (see FIG. 6) 126 placed over the first peripheral panel 122 and forming an exhaust opening 128.

Referring to FIG. 6, the first base 112 may be fixed to the ground and secure the components placed inside the first casing 110. The first base 112 may include a first base panel 116, a first base support 118 placed below the first base panel 116, for placing the first base panel 116 some distance above the ground, and a first base frame 120 placed on top of the first base panel 116, where some of the components are secured.

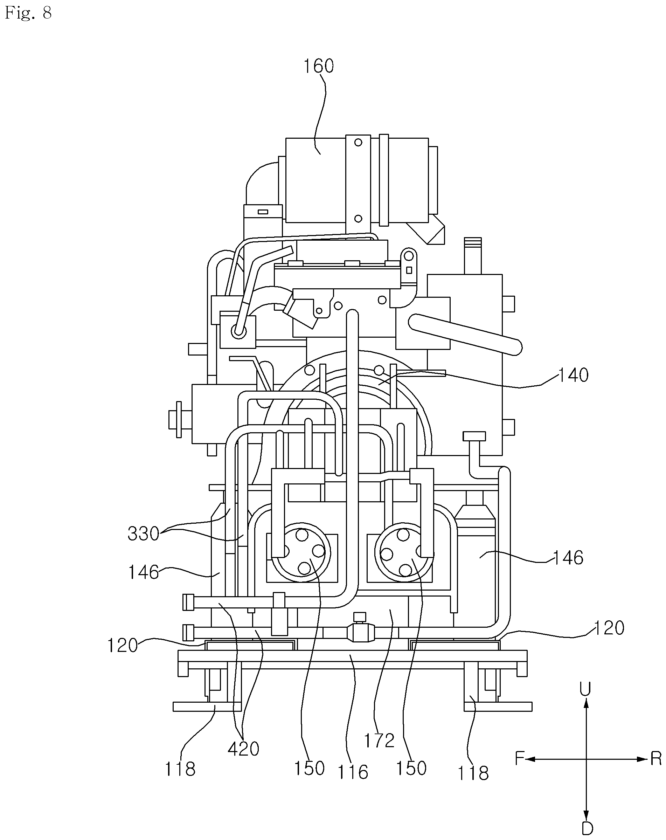

Referring to FIG. 8, the first base 112 may include two first base frames 120 on top of the first base panel 116 that are placed apart from each other. The first base frames 120 have a roughly Π-shaped cross section, with two opposite edges being secured to the first base panel 116. With the first base frames 120 whose two opposite edges are bent and secured to the first base panel 116, it is possible to alleviate vibration generated from a damper 146 and transmitted to the first base panels 116, which will be described later.

Referring to FIG. 7, the first frames 114 may be placed on the corners of the first base panel 116. The first peripheral panel 122 is connected to the first frames 114 spaced apart from one another and covers the periphery of the first outdoor unit 100.

Referring to FIG. 7, the first frames 114 may include a plurality of first corner frames 114a placed on the corners of the first base 112 and a first middle frame 114b placed between the first corner frames 114a.

The first peripheral panel 122 includes a first front panel 122a placed on one side, a first rear panel 122b spaced apart from the first front panel 122a and placed parallel to the first front panel 122a, and two first side panels 122c and 122d placed between the first front panel 122a and the first rear panel 122b. Referring to FIGS. 4 and 5, the first front panel 122a and the first rear panel 122b may be the same size, and the two first side panels 122c and 122d also may be the same size.

Referring to FIG. 5, the first front panel 122a may be divided into a (1-1)th half panel 122a1 and a (1-2)th half panel 122a2 that are placed to the left and right of the first middle frame 114b.

The first peripheral panel 122 includes a first service panel 123 where a first connector 124 is placed, with a first outer refrigerant tube 310 and an outer water tube (or water tube) 410 being connected to the first connector 124. Referring to FIG. 5, the (1-2)th half panel 122a2 may be used as the first service panel 123. The first service panel 123 is placed between the first middle frame 114b and the first corner frames 114a. A first control box 180 to be described later may be placed inside the first service panel 123.

That is, the first service panel 123 may be removably placed, and this may increase accessibility to the first control box 180. Also, the refrigerant tubes 300 and water tubes 400 connected to the first connector 124 placed on the first service panel 123 are made easily serviceable.

The first connector 124 where the first outer refrigerant tube 310 and the outer water tube 410 are connected is placed on the first service panel 123. The first connector 124 is placed on a lower end of the first service panel 123.

The first service panel 123 has an opening portion communicating with the inside of the first control box 180 placed within, and a first cover 125 covering the opening portion is placed on the first service panel 123. The first cover 125 may be placed on an upper end of the first service panel 123 to open and close the opening portion communicating with the first control box 180.

The first control box 180 is placed on an upper end of the first service panel 123. That is, the first control box 180 is placed on an upper end of the first service panel 123 so as to be spaced apart from the engine 140, thereby minimizing the heat generated from the engine 140 from being transmitted to the first control box 180.

Referring to FIG. 5, the (1-1)th half panel 122a1 may have an opening portion communicating with the inside of a circuit box 182 placed within, and a third cover 125 covering the opening portion may be placed on the (1-1)th half panel 122a1. The third cover 125b may be placed on a lower end of the (1-1)th half panel 122a1 to open and close the opening portion communicating with the circuit box 182.

Referring to FIG. 6, the first upper panel 126 has an exhaust opening 128 with no fan, through which air heated by the engine 140 is exhausted. Also, a top cover 130 for keeping water from coming from the outside through the exhaust opening 128 may be placed on the first upper panel 126. Moreover, the gas exhaust opening 128 for emitting exhaust gas exiting the engine 140 may be placed on the first upper panel 126.

A first top grille 132 covering the top of the first upper panel 126 may be placed on top of the first upper panel 126. The first top grille 132 has a lattice pattern or stripe pattern so as to prevent an external object from falling to the first upper panel 126, without disturbing air flow.

The engine 140 is an internal combustion engine which works through the process of burning compressed gas. The engine 140 may rotate an engine side pulley 142 (see FIG. 1) placed on one side of the engine 140 on a four-stroke cycle of intake, compression, ignition, and exhaust.

Referring to FIG. 7, the first outdoor unit 100 includes an engine frame 144 located above the first base 112 where the engine 140 is fixed in place, and a damper 146 that connects the engine frame 144 and the first base 121 and alleviates vibration caused by the running of the engine 140. The first outdoor unit 100 includes a plurality of dampers 146. Referring to FIGS. 6 and 7, four dampers 146 may be placed apart from one another.

Each of the dampers 146 may connect the engine frame 144 and the first base 112. Lower ends of the dampers 146 may be attached to the first base frames 120, and an upper end thereof may be attached to the engine frame 144.

One side of the engine frame 144 may be attached to the engine 140, and the other side may be connected to the damper 146. Thus, it is possible to minimize the vibration caused by the running of the engine 140 from being transmitted throughout the first casing 110.

The engine frame 144 may fix the compressor 150 in place which is connected to the engine 140 by the belt 152. That is, the engine frame 144 may allow the engine 140 and the compressor 150 to be placed apart from the first base 112 by some distance.

By being connected to the engine 140, the compressor 150 may compress refrigerant when the engine 140 operates. Two compressors 150 connected to the engine 140 may be placed on the first outdoor unit 100. The compressors 150 may have a compressor side pulley 154 connected to the engine side pulley 142 by the belt 152, and may compress refrigerant as the compressor side pulley 154 (see FIG. 1) rotates by the running of the engine 140.

Referring to FIGS. 6 and 7, the first outdoor unit 100 may include an air cleaner 160 that provides clean air by filtering the air supplied to the engine 140, a zero governor 162 that allows for the supply of gas to the engine 140 at a given pressure, a mixer 164 that mixes the gas and air supplied through the air cleaner 160 and zero governor 162, an exhaust gas heat exchanger 166 that transfers heat between water and gas exiting the engine 140, a muffler 168 that reduces the noise of the exhaust gas exiting the engine, and a drain filter 170 that purifies and releases condensate generated from the exhaust gas that has passed through the muffler 168.

The zero governor 162 allows for the supply of fuel at a given pressure regardless of changes in the pressure or flow rate of fuel entering the zero governor 162. The zero governor 162 may maintain a stable exit pressure across a wide range and adjust the pressure of gas fuel supplied to the engine so that it remains almost steady at atmospheric pressure.

The air cleaner 160 may block dust, misty moisture, and oil getting mixed into the air by filtering outside air supplied to the engine using a filter.

The mixer 164 lets out the supplied fuel and air at a given mixture ratio and supplies them to the engine.

The zero governor 162 may be fixed in place to one side of the first frames 114. The air cleaner 160 is located adjacent to the zero governor 162. The air cleaner 160 may be secured to the first upper panel 126 through a separate securing member 184.

The muffler 168 may be fixed in place to one side of the first frames 114. The muffler 168 may be placed above the drain filter 170 so that the condensate generated from the muffler 168 may enter the drain filter 170. The drain filter 170 may be fixed in place to the first base 112. Referring to FIG. 7, the drain filter 170 may be fixed in place on top of the first base frames 120. A gas exhaust opening 134 may be placed above the muffler 168. Thus, the exhaust gas passed through the muffler 168 may escape through the gas exhaust opening 134.

The first outdoor unit 100 includes an oil tank 172 storing oil and an oil pump 174 for supplying the oil stored in the oil tank 172 to the engine. The oil pump 174 may supply the oil stored in the oil tank 172 to the engine and preheat or cool the engine 140.

The oil tank 172 may be fixed in place above the first base panel 116. The oil tank 172 may be placed between the two first base frames 120 placed apart from each other.

The first outdoor unit 100 may include a first control box 180 incorporating a first controller (not shown) for regulating the operation of the engine 140 or compressor 150, and a circuit box 182 with a transformer (not shown) placed in it to convert current signal and voltage signal.

The first control box 180 is placed apart from the engine 140. Referring to FIG. 7, the engine 140 is fixed in place to the first base 112, and the first control box 180 is located adjacent to the first upper panel 126. In an inner space formed by the first peripheral panel 122, the first base 112, and the first upper panel 126, the first control box 180 is placed as far as possible from the engine 140. This minimizes the heat generated from the engine 140 from being transmitted to the first control box 180.

The first control box 180 is placed behind the first service panel 123. The first control box 180 may be placed between the first middle frame 114b and the first corner frames 114a, and may be fixed in place to the first middle frame 114b and the first corner frames 114a.

### <Second Outdoor Unit>

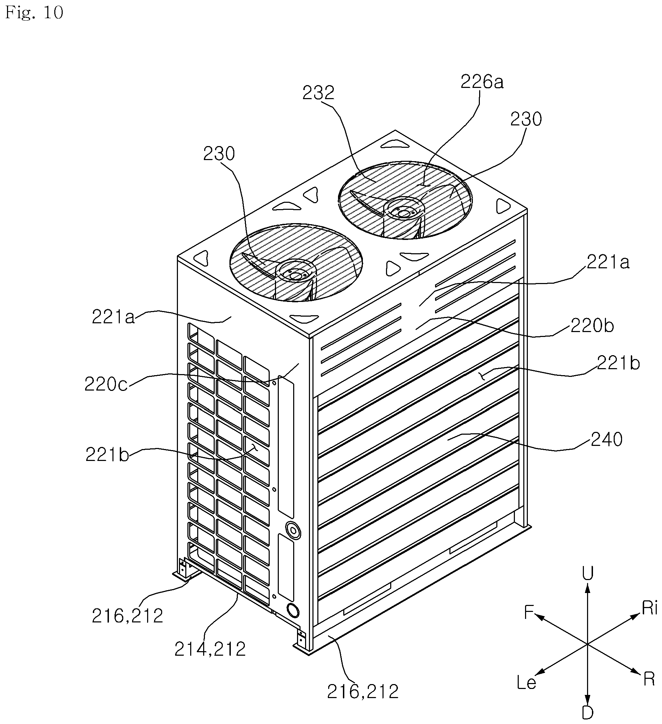

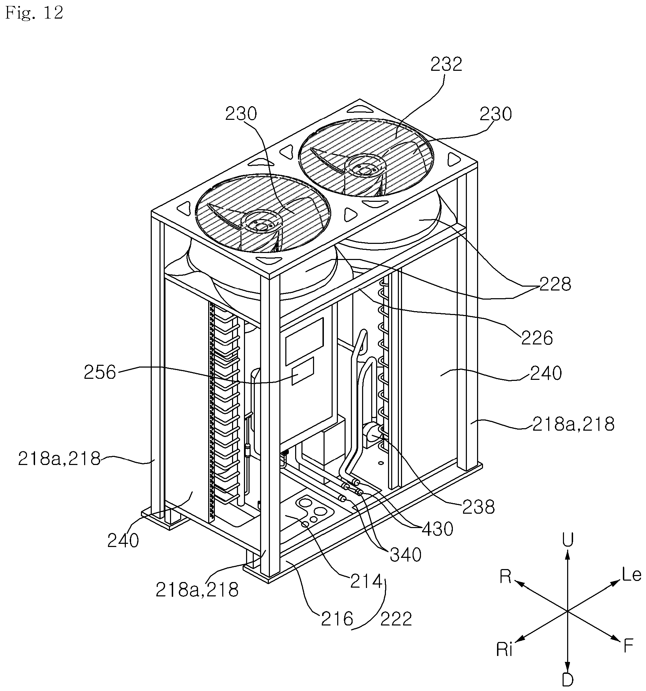

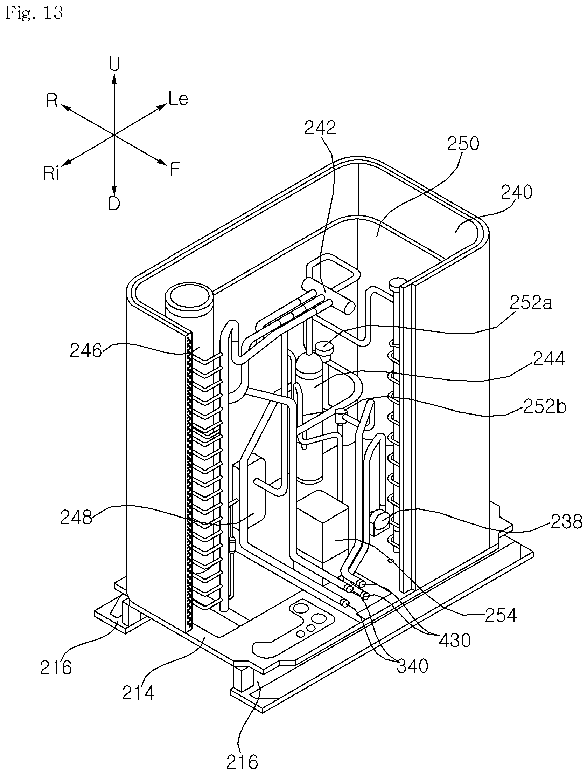

The second outdoor unit 200 includes a second casing 210 (see FIG. 10) forming the exterior that has a second intake opening 221a on the periphery and a discharge opening 226a on the top, a blower fan 230 (see FIG. 10) that sends the air inside the second casing 210 to the discharge opening 226a, a fan motor M (see FIG. 1) that rotates the blower fan 230, an outdoor heat exchanger 240 (see FIG. 10) placed inside the second casing 210 where the second intake opening 221a is formed, a water pump 238 (see FIG. 12) that supplies water to the engine 140 or the exhaust gas heat exchanger 166, and a switching valve 242 (see FIG. 13) placed inside the second casing 210 that sends the refrigerant discharged from the compressor 150 to the outdoor heat exchanger 240 or the indoor unit.

The second casing 210 may include a second base 212 (see FIG. 12) covering the bottom, second frames 218 (see FIG. 12) placed vertically upward from the second base 212 and forming a framework, a second peripheral panel 222 (see FIG. 10) placed above the second base 212 and connected to the second frames 218 to cover the periphery, and a second upper panel 226 (see FIG. 12) placed over the second peripheral panel 220 and forming an discharge opening 226a.

The second base 212 includes a second base panel 214 and a second base support 216 placed below the second base panel 214, for placing the second base panel 214 some distance above the ground.

The second frames 218 may be placed on the corners of the second base panel 214. The second peripheral panel 220 may be placed such that it is connected to the second frames 218 spaced apart from one another, so as to cover the periphery of the second outdoor unit 200.

The second frames 218 may include a plurality of second corner frames 218a (see FIG. 12) placed on the corners of the second base 212 and a second middle frame (not shown) placed between the second corner frames 218a.

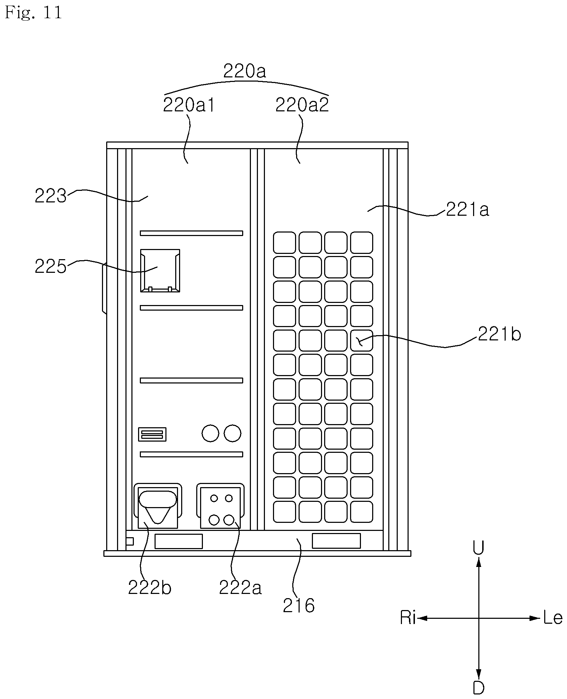

Referring to FIGS. 10 and 11, the second peripheral panel 220 includes a second front panel 220a placed on one side, a second rear panel 220b spaced apart from the second front panel 220a and placed parallel to the second front panel 220a, and two second side panels 220c and 220d placed between the second front panel 220a and the second rear panel 220b. The second front panel 220a and the second rear panel 220b may be the same size, and the two second side panels 220c and 220d also may be the same size.

Referring to FIG. 11, the second front panel 220a may be divided into a (2-1)th half panel 220a1 and a (2-2)th half panel 220a2 that are placed to the left and right when viewed from the front.

The second peripheral panel 220 includes a second service panel 223 where a second connector 222a is placed, with a second outer refrigerant tube 310 and an outer water tube (or water tube) 410 being connected to the second connector 222a. Referring to FIG. 11, the (2-2)th half panel 220a2 may be used as the second service panel 223. The second service panel 223 is placed between the second middle frame 218b and the second corner frames 218a. A second control box 256 to be described later may be placed inside the second service panel 223.

Referring to FIG. 11, the second connector 222a where the first outer refrigerant tube 310 and the outer water tube 410 are connected is placed on the second service panel 223. The second connector 222a is placed on a lower end of the second service panel 223.

Referring to FIG. 11, a third connector 222b where a second outer refrigerant tube 320 is connected may be placed on the second service panel 223. The third connector 222b may be placed apart from the second connector 222a in one direction, and may be placed at the same height as the second connector 222a.

The second service panel 223 has an opening portion communicating with the inside of the second control box 256 placed within, and a second cover 225 covering the opening portion is placed on the second service panel 223. The second cover 225 may be placed on an upper end of the second service panel 223 to open and close the opening portion communicating with the second control box 256.

The second control box 256 is placed on an upper end of the second service panel 223. That is, the second control box 256 is located adjacent to the blower fan 230 placed in an upper part of the second peripheral panel 223, which allows for quick formation of a convection of air around the second control box 256 and therefore cools the second control box 256.

At least one discharge opening 226a is formed on the second upper panel 226. Referring to FIG. 12, two discharge openings 226a are formed on the second upper panel 226. A blower fan 230 is placed under each of the discharge openings 226a. An orifice 228 where the blower fan 230 resides is placed under the second upper panel 226.

A second top grille 232 covering the blower fan 230 and the second upper panel 226 may be placed on top of the second upper panel 226.

Referring to FIGS. 10 to 11, the second peripheral panel 220 may have a second intake opening 221a in a lower part by which the inside and outside of the second casing 210 communicate, and a cover portion 221a placed above the second intake opening that covers the outer sides of the blower fan 230 and orifice 228. The second service panel 223 may be formed in its entirety as the cover portion 221 without having an intake opening.

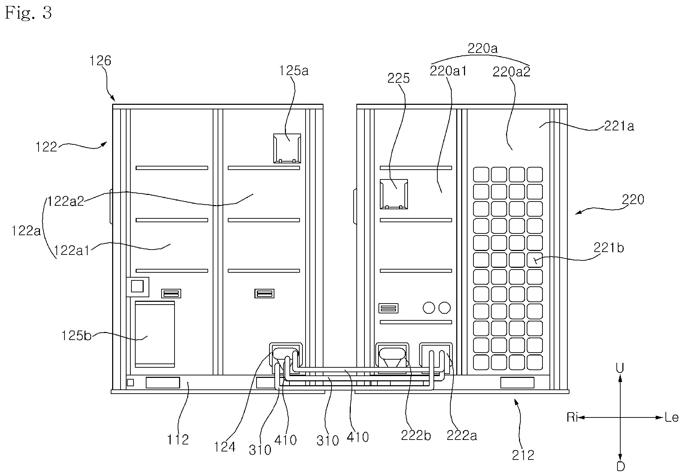

Referring to FIGS. 2 and 3, the second casing 210 may be made the same size as the first casing 110. That is, the second base 212 included in the second casing 210 may be the same size as the first base 112 included in the first casing 110. Also, the second peripheral panel 220 included in the second casing 210 may be the same size as the first peripheral panel 122 included in the first casing 110. Hence, the first base 112 and the second base 212 may be produced in the same manufacturing process since they are the same size, and the first peripheral panel 122 and the second peripheral panel 220 also may be produced in the same manufacturing process since they are the same size. This will simplify the production process of the first casing 110 and second casing 210 and reduce the manufacturing costs.

The outdoor heat exchanger 240 is placed inside the second intake opening 221a formed on the second peripheral panel 220. The outdoor heat exchanger 240 may be placed on at least two sides of the second peripheral panel 220 of the second casing 210. The outdoor heat exchanger 240 may be placed side by side on all four sides of the second peripheral panel 220.

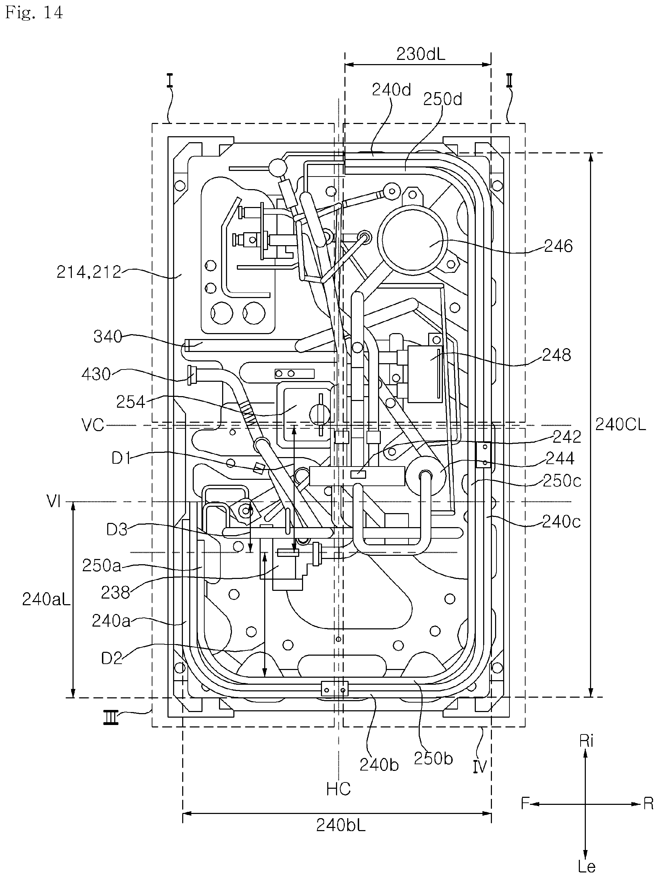

Referring to FIG. 14, the outdoor heat exchanger 240 includes a front heat exchanger 240a placed inside the second front panel 220a, a first side heat exchanger 240b extending from the front heat exchanger 240a and placed inside the second side panel 220c, a rear heat exchanger 240a extending from the first side heat exchanger 240b and placed inside the second rear panel 220b, and a second side heat exchanger 240d extending from the second rear heat exchanger 240c and placed inside the second side panel 220d.

The front heat exchanger 240a may be made half or less than the size of the rear heat exchanger 240c. The second side heat exchanger 240d may be made half or less than the size of the first side heat exchanger 240b.

The outdoor heat exchanger 240 is not placed inside the second service panel 223. Thus, the outdoor heat exchanger 240 is not placed inside the (2-1)th half panel 220a1 of the second front panel 220a. That is, the front heat exchanger 240a is placed inside the (2-2)th half panel 220a2.

The internal components placed inside the second outdoor unit 200 are placed mainly behind the (2-1)th half panel 220a1. Here, the internal components placed inside the second outdoor unit 200 refer to the components placed inside the second peripheral panel 220, apart from the outdoor heat exchanger 240 and the heat radiator 250. That is, the internal components may include an accumulator 246, a plate-type heat exchanger 248, a water tank 254, and a water pump 238. Further, the internal components may include a switching valve 242 and water valves 252a and 252b.

Referring to FIG. 14, the accumulator 246, the plate-type heat exchanger 248, and the cooling water tank 254 are placed in an area where the second service panel 223 resides, with respect to a virtual vertical line VC extending forward and backward from the second middle frame 218b.

Moreover, an oil separator 244 and the water pump 238 are placed opposite the second service panel 223 with respect to the virtual vertical line VC or located closer to the virtual vertical line VC than the first side heat exchanger 240b.

The outdoor heat exchanger 240 may be placed inside the second peripheral panel 220, except the second service panel 223. The outdoor heat exchanger 240 may have one edge on the inside of the (2-2)th half panel 220a2 of the second front panel 220a and the other edge on the inside of the second side panels 220c and 220d located adjacent to the (2-1)th half panel 220a1.

A blower fan 230 is placed above the outdoor heat exchanger 240 to move air to the discharge opening 226a formed on the second upper panel 226. An orifice 228 is placed above the outdoor heat exchanger 240 to form a flow of air moving to the discharge opening 226a and create a space where the blower fan 230 resides.

The water pump 238 may send water to the engine 140 and the exhaust gas heat exchanger 166 to cool the engine 140 and the exhaust gas heat exchanger 166. The water pump 238 may be fixed in place to the second base 212.

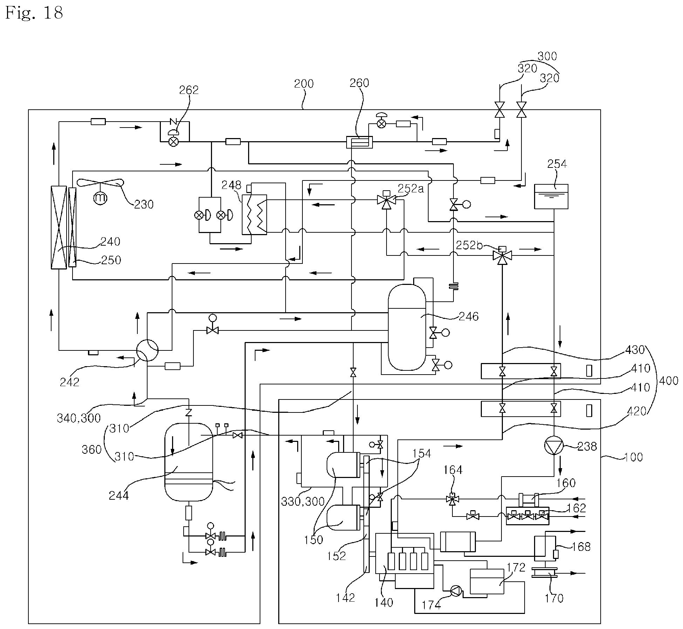

Referring to FIG. 18, the water pump 238 may be placed in the first outdoor unit 100. Even if the water pump 238 is placed in the first outdoor unit 100, there are no additional water tubes or refrigerant tubes that are exposed on the outside of the first outdoor unit 100 and second outdoor unit 200. Thus, the water pump 238 may be placed in the first outdoor unit 100. However, in order to regulate the operations of the blower fan 230 and water pump 238 by a second controller, it is desirable that the water pump 238 is placed inside the second outdoor unit 200, as shown in FIG. 1.

The switching valve 242 is placed inside the second casing 210 and sends the refrigerant discharged from the compressor 150 to the outdoor heat exchanger 240 or the indoor unit. The switching valve 242 may send the refrigerant supplied from the indoor unit or the plate-type heat exchanger 248 to be described later to the compressor 150. The switching valve 242 is connected to the oil separator 244 and the accumulator 246. Therefore, the refrigerant discharged from the compressor 150 and passed through the oil separator 244 may enter the switching valve 242. Also, the refrigerant may flow from the switching valve 242 to the compressor 150 via the accumulator 246. The switching valve 242 may be a four-way valve that selectively connects refrigerant tubes that are connected in four directions.

Referring to FIG. 1 and FIG. 14, the second outdoor unit 200 includes an oil separator 244 that separates oil from the refrigerant discharged from the compressor 150, an accumulator 246 that separates liquid refrigerant and supplies vapor refrigerant to the compressor 150, a plate-type heat exchanger 248 that transfers heat between water and refrigerant, a heat radiator 250 that transfers heat between water and outside air, water valves 252a and 252b that adjust the direction of flow of water, and a water tank 254 storing water. The second outdoor unit 200 may further include an overcooling heat exchanger 260 that cools moving liquid refrigerant by expanding some of the moving liquid refrigerant and transferring heat, and an expansion valve 262 that expands the refrigerant released from the outdoor heat exchanger 240.

The oil separator 244 is placed between the switching valve 242 and the compressor 150. The oil separator 244 separates oil from the refrigerant discharged from the compressor 150. The oil separator 244 may be fixed in place to the second base panel 214.

The accumulator 246 is placed between the switching valve 242 and the compressor 150. The second base panel 214 separates the refrigerant entering the compressor 150 into vapor refrigerant and liquid refrigerant and sends the vapor refrigerant to the compressor 150. The accumulator 246 may be fixed in place to the second base panel 214. The accumulator 246 may have a cylindrical shape.

Referring to FIG. 1, refrigerant flowing through the four-way valve 242 from the indoor heat exchanger (not shown) or refrigerant flowing through the plate-type heat exchanger 248 may be supplied to the accumulator 246. Also, the accumulator 246 may be connected to the overcooling heat exchanger 260 so that refrigerant generated by the overcooling heat exchanger 260 is supplied to it.

The plate-type heat exchanger 248 transfers heat between water caused to flow by means of the water pump 238 and refrigerant caused to flow by means of the compressor 150. In heating mode in which the indoor heat exchanger (not shown) placed in the indoor unit is used as a condenser, the refrigerant passed through the indoor heat exchanger (not shown) may flow to the plate-type heat exchanger 248. Also, in heating mode, the water caused to flow by means of the water pump 238 may flow to and then be cooled in the plate-type heat exchanger 248.

The plate-type heat exchanger 248 transfers heat between refrigerant coming from the indoor heat exchanger (not shown) and cooling water released from the engine 140. The plate-type heat exchanger 248 may be connected to the first valve 252a and the water pump 238 and send the water coming via the first valve 252a to the water pump 238 through heat transfer. The plate-type heat exchanger 248 may supply the refrigerant coming from the indoor heat exchanger to the accumulator 246 through heat transfer.

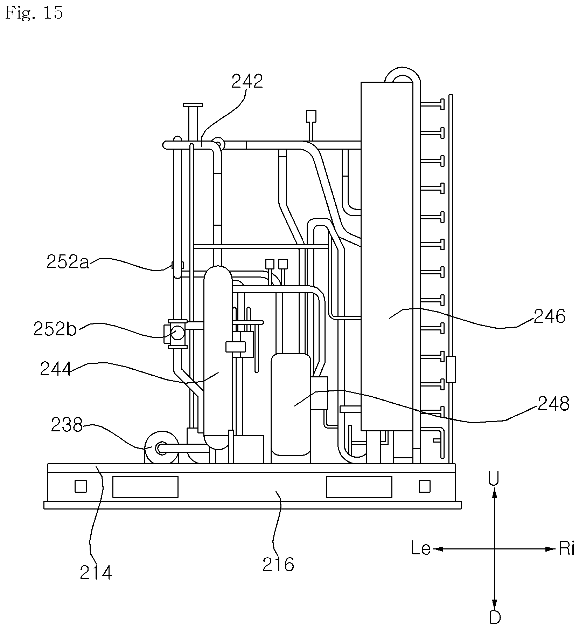

The plate-type heat exchanger 248 may be fixed in place to the second base panel 214. Referring to FIG. 15, the plate-type heat exchanger 248 may be placed between the accumulator 246 and the oil separator 244.

The heat radiator 250 may lower the temperature of water by transferring heat between the water and the air flowing to the second intake opening 221a. The heat radiator 250 is placed inside the outdoor heat exchanger 240. The area the heat radiator 250 occupies in the direction of the second intake opening 221a may be smaller than the area the outdoor heat exchanger 240 occupies in the direction of the second intake opening 221a. Referring to FIG. 13, the vertical length 250L of the heat radiator 250 may be shorter than the vertical length 240L of the outdoor heat exchanger 240.

The heat radiator 250 includes a front heat radiator 250a placed inside the front heat exchanger 240a, a first side heat radiator 250b placed inside the first side heat exchanger 240b, a rear heat radiator 250c placed inside the rear heat exchanger 240c, and a second side heat radiator 250d placed inside the second side heat exchanger 240d.

Referring to FIG. 13, the water valves 252a and 252b include a first valve 252a that sends the water released from the engine 140 to the plate-type heat exchanger 248 or the heat radiator 250, and a second valve 252b that sends the water released from the engine 140 to the first valve 252a or the water pump 238. The first valve 252a and the second valve 252b may be three-way valves.

Referring to FIG. 12, the second outdoor unit 200 includes a second control box 256 incorporating a second controller (not shown) for regulating the operations of the blower fan 230 and water pump 238.

The second control box 256 is placed inside the second service panel 223. The second controller for regulating the operations of the blower fan 230 and water pump 238 is placed inside the second control box 256. That is, the operations of the blower fan 230 and water pump 238 may be regulated by a single electronic part. In a case where the water pump 238 is placed inside the first outdoor unit 100, a separate electronic part for regulating the operation of the water pump 238 may be required. In the present disclosure, the operations of both of the blower fan 230 and water pump 238 may be regulated by the second controller placed inside the second control box 256, thereby preventing an increase in the cost of additional parts. Also, the second controller may adjust the opening and closing of the switching valve 242 or water valves 252a and 252b.

That is, when the air conditioner is in cooling mode, the second controller may adjust the switching valve 242 to send the refrigerant released from the compressor 150 to the outdoor heat exchanger 240, and, when the air conditioner is in heating mode, the second controller may adjust the switching valve 242 to send the refrigerant released from the compressor 150 to the indoor heat exchanger.

Moreover, when the air conditioner is in cooling mode, the second controller may adjust the water valves 252a and 252b to send the water released from the engine 140 to the heat radiator 250, and, when the air conditioner is in heating mode, the second controller may adjust the water valves 252a and 252b to send the water released from the engine 140 to the plate-type heat exchanger 248.

The components placed inside the second outdoor unit 200 are located adjacent to an area not concealed by the outdoor heat exchanger 240.

Referring to FIG. 14, the front heat exchanger 240a is positioned to face the rear heat exchanger 240c. The lateral length 240aL of the front heat exchanger 240a may be equal to or shorter than half the lateral length 240cL of the rear heat exchanger 240c.

The first side heat exchanger 240b is positioned to face the second side heat exchanger 240d. The longitudinal length 240dL of the second side heat exchanger 240d may be equal to or shorter than half the longitudinal length 240bL of the first side heat exchanger 240b.

The lateral length 240cL of the rear heat exchanger 240c may range from 1.5 to 2 times the longitudinal length 240bL of the first side heat exchanger 240b.

The area not concealed by the outdoor heat exchanger 240 is formed on the front and right sides of the second outdoor unit 200.

Referring to FIG. 14, the second outdoor unit 200 may be divided into four sections by a virtual vertical line VC that extends to the front and rear (F-R) from the center of the lateral axis (Ri-Le) and divides the second outdoor unit 200 in left and right directions, and a virtual horizontal line HC that extends to the left and right (Ri-Le) from the center of the longitudinal axis (F-R) and divides the second outdoor unit 200 in front and rear directions.

Referring to FIG. 14, the second outdoor unit 200 may be divided into a first section I placed in the front right side, a second section II placed in the rear right side, a third section III placed in the front left side, and a fourth section IV placed in the rear left side, with respect to the vertical line VC and the horizontal line HC.

Referring to FIG. 14, the outdoor heat exchanger 240 is not placed in the first section I. The second service panel 223 is placed at the front of the first section I. Thus, the components placed inside the second casing 210 may be repaired or inspected once the second service panel 223 is removed.

Therefore, the components placed inside the second outdoor unit 200 may be placed in the first section I or the second section II. Referring to FIG. 14, the accumulator 246 and the plate-type heat exchanger 248 are placed in the second section II. Referring to FIG. 14, the water tank 254 is placed in the first section I.

They may be placed in the third section III or the fourth section IV to make effective use of the interior of the second casing 210. The components placed in the third section III or the fourth section IV are located closer to the vertical line VC than the first side heat exchanger 240b, thereby enabling the user to have the relevant component easily repaired or inspected.

That is, referring to FIG. 14, the distance D1 from the vertical line VC to the water pump 238 placed in the third section III is shorter than the distance D2 from the vertical line VC to the first side heat exchanger 240b. Also, the distance D3 from a virtual reference line V1, which extends to the front and rear from the end of the front heat exchanger 240a placed at the front, to the water pump 238 is shorter than the distance D2 from the virtual reference line V1 to the first side heat exchanger 240b.

The switching valve 242 and oil separator 244 placed in the fourth section IV are located closer to the vertical line VC than the first side heat exchanger 240b.

### <Refrigerant Tubes and Water tubes>

Referring to FIG. 1, the refrigerant tubes 300 may send the refrigerant discharged from the compressor 150 to the outdoor heat exchanger 240 or the indoor heat exchanger (not shown) and circulate the refrigerant back to the compressor 150 after heat transfer. The refrigerant tubes 300 may include a first inner refrigerant tube 330 placed inside the first outdoor unit 100, a second inner refrigerant tube 340 placed inside the second outdoor unit 200, and a third inner refrigerant tube (not shown) placed inside the indoor unit (not shown). Also, the refrigerant tubes 300 may include a first outer refrigerant tube 310 that is exposed on the outside of the first outdoor unit 100 and second outdoor unit 200 and connects the first outdoor unit 100 and the second outdoor unit 200, and a second outer refrigerant tube 320 that is placed outside the second outdoor unit 200 and the indoor unit and connects the second outdoor unit 200 and the indoor unit.

The water tubes 400 may allow the water discharged from the water pump 238 to pass through the exhaust gas heat exchanger 166, the engine 140, and the heat radiator 250 or to pass through the plate-type heat exchanger 248 and circulate back to the water pump 238.

Referring to FIG. 1, the water tubes 400 include a first inner water tube 420 placed inside the first outdoor unit 100, a second inner water tube 430 placed inside the second outdoor unit 200, and an outer water tube 410 placed outside the first outdoor unit 100 and the second outdoor unit 200 and connecting the first outdoor unit 100 and the second outdoor unit 200.

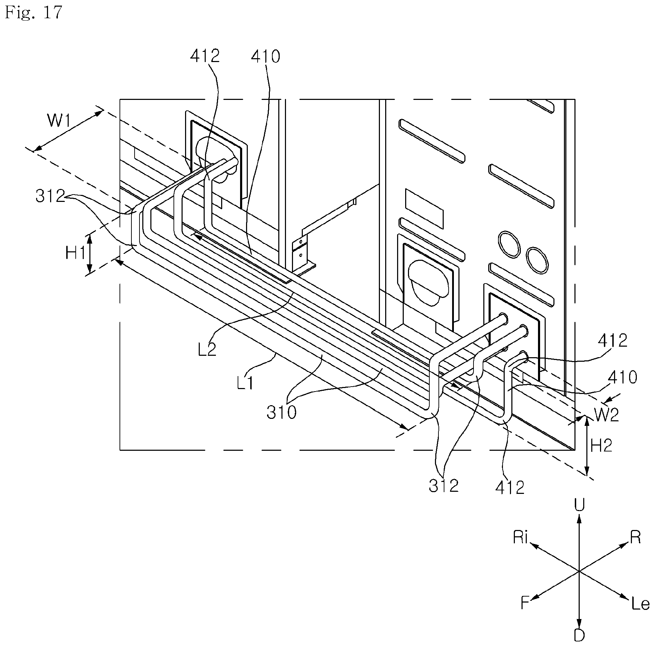

Referring to FIGS. 2 and 3, the first outer refrigerant tube 310 and the second outer refrigerant tube 410 connect the first outdoor unit 100 and the second outdoor unit 200. Referring to FIG. 17, the first outer refrigerant tube 310 and the outer water tube 410 include at least one bending portion 312 and 412 so as to keep the vibration generated from the first outdoor unit 100 from being transmitted to the second outdoor unit 200. Referring to FIG. 17, the first outer refrigerant tube 310 and the outer water tube 410 each include four bending portions 312 and 412.

The length of the water tubes 400 may be set in consideration of the performance of the water pump 238. The performance of the water pump 238 needs to be enough to form a flow of water throughout the water tubes 400 including the heat radiator 250. Thus, the length of the water tubes 400 may be limited by the performance range of the water pump 238, and therefore it is desirable that the outer water tube 410 is made as short as possible. On the contrary, the length of the refrigerant tubes 300 may be less limited in length compared to water tubes 400, in that the compressor 150 is run by the engine 140 and connected to a plurality of indoor units.

Accordingly, referring to FIG. 17, the length L1+2*H1+2*W1 of the first outer refrigerant tube 310 exposed to the outside (i.e., the length of the first outer refrigerant) is greater than the length L2+2*H2+2*W2 of the outer water tube 410 exposed to the outside (i.e., the length of the outer water tube).

The first outer refrigerant tube 310 interconnects the first outdoor unit 100 and the second outdoor unit 200 which are located adjacent to each other, and the second outer refrigerant tube 320 interconnects the second outdoor unit 200 and the indoor unit (not shown) which are placed in difference spaces. Thus, the length L1+2*H1+2*W1 of the first outer refrigerant tube 310 may be less than the length (not shown) of the second outer refrigerant tube 320 exposed to the outside (i.e., the length of the second outer refrigerant tube).

In the above, exemplary embodiments of the present disclosure have been illustrated and described, but the present disclosure is not limited to the specific embodiments described above, and those skilled in the art will appreciate that various modifications are possible, without departing from the scope of the invention as disclosed in the accompanying claims.

An air conditioner according to the present disclosure has one or more of the following advantages:
Firstly, the air conditioner according to the present disclosure can achieve the reliability of the outdoor heat exchanger by dividing an outdoor unit into a first outdoor unit where a compressor runs by an engine is placed and a second outdoor unit where a plurality of heat exchangers reside and connecting the first outdoor unit and the second outdoor unit to a first outer refrigerant tube and an outer water tube, so as to minimize the vibration caused by the running of the engine from being transmitted to the second outdoor unit.
Secondly, the air conditioner according to the present disclosure makes efficient use of the space for the first outdoor unit and second outdoor unit by placing an engine, components related to engine operation and gas exhaustion, and a compressor in the first outdoor unit and placing other components like those required for heat transfer or those through which refrigerant or water flows in the second outdoor unit.
Thirdly, the air conditioner according to the present disclosure allows for easy inspection and repair by a mechanic by placing a control box and a connector on the same panel, since the control box needs to be serviced the most and the connector connects refrigerant tube together.
Fourthly, the air conditioner according to the present disclosure can improve the speed of production in the manufacture of casings and reduce the manufacturing expenses by making the first outdoor unit and the second outdoor unit equal in size.

The advantages of the present invention are not limited to the aforementioned advantages, and other advantages, which are not mentioned above, will be apparent to a person having ordinary skill in the art from the following description.

## Claims

1. An air conditioner comprising:
a first outdoor unit (100) including an engine (140) operated by combustion of a gas fuel, a compressor (150) connected to the engine (150) by a belt (152) for compressing refrigerant, and a first casing (110) exposed outside and providing a space where the engine (140) and the compressor (150) are placed;
an indoor unit including an indoor heat exchanger for transferring heat between air in an indoor space and refrigerant discharged from the compressor (150);
a second outdoor unit (200) including an outdoor heat exchanger (240) that transfers heat between outside air and the refrigerant discharged from the compressor (150), a switching valve (242) configured to send the refrigerant discharged from the compressor (150) to the outdoor heat exchanger (240) or the indoor heat exchanger, and a second casing (210) exposed outside and providing a space where the outdoor heat exchanger (240) and the switching valve (242) are placed;
a first refrigerant tube (310) that connects the compressor (150) and the switching valve (242);
a water tube (410) connected to the engine (140); and
a second refrigerant tube (320) that connects the switching valve (242) and the indoor heat exchanger,
wherein the second outdoor unit (200) is spaced apart from the first outdoor unit (100); and
the first refrigerant tube (310), the water tube (410) and the second refrigerant tube (320) are exposed on the outside of the first outdoor unit (100) and second outdoor unit (200),
wherein the first casing (110) comprises a plurality of first peripheral panels (122) placed around four sides of the first casing (110),
wherein the second casing (210) comprises a plurality of second peripheral panels (222) placed around four sides of the second casing (210),
wherein the first refrigerant tube (310) and the water tube (410) have at least one bending portion,
**characterized in that**
the plurality of first peripheral panels (122) includes a first service panel (123) where a first connector (124) is placed, with the first refrigerant tube (310) and the water tube (410) being connected to the first connector (124), and
the plurality of second peripheral panels includes a second service panel (223), where a second connector (222a) is placed, with the second refrigerant tube (320) and the water tube (410) being connected to the second connector (222a).

2. The air conditioner of claim 1, wherein the length of the first refrigerant tube (310) exposed on the outside of the first outdoor unit (100) and second outdoor unit (200) is equal to or greater than the length of the water tube (410) exposed on the outside of the first outdoor unit (100) and second outdoor unit (200).

3. The air conditioner of claim 1 or 2, wherein the length of the first refrigerant tube (310) exposed on the outside of the first outdoor unit (100) and second outdoor unit (200) is less than the length of the second refrigerant tube (320) exposed on the outside of the first outdoor unit (100) and second outdoor unit (200).

4. The air conditioner of any one of claims 1 to 3, further comprising a water pump (238) that is placed in the first outdoor unit (100) or the second outdoor unit (200) and configured to supply water to the engine (140).

5. The air conditioner of claim 4, wherein the second outdoor unit (200) comprises:
a heat radiator (250) configured to transfer heat between the outside air and water supplied by the water pump (238);
a plate-type heat exchanger (248) configured to transfer heat between refrigerant and the water supplied by the water pump (238); and
a water valve (252) configured to send the water supplied by the water pump (238) to the heat radiator (250) or the plate-type heat exchanger (248).

6. The air conditioner of any one of claims 1 to 5, wherein the first casing (110) comprising:
a first base (112) covering the bottom of the first casing (110);
a first peripheral panel (122) placed above the first base (112) and covering a side of the first casing (110); and
a first upper panel (126) placed over the first peripheral panel (122) and having an exhaust opening (128), and
the first outdoor unit (100) comprising:
an engine frame (144) to which the engine (140) and the compressor (150) are secured; and
a damper (146) that is disposed between the engine frame (144) and the first base (112) to reduce vibration caused by the engine (140).

7. The air conditioner of claim 6, wherein the first base (112) comprises:
a first base panel (116);
a first base support (118) placed below the first base panel (116), for placing the first base panel (116) some distance above the ground; and
a first base frame (120) placed on top of the first base panel (116), wherein the damper (146) is secured in place to the first base frame (120).

8. The air conditioner of claim 7, wherein the first base frame (120) has a substantially Π-shaped cross section, with two opposite edges thereof being secured to the first base panel (116).

9. The air conditioner of any one of claims 6 to 8,
wherein the first outdoor unit (100) further comprises a first control box (180) placed adjacent to the first service panel (123), for regulating the operation of the engine (140) or compressor (150).

10. The air conditioner of claim 9, wherein the first control box (180) is fixed to an upper portion of the first service panel (123) so as to be spaced apart from the engine (140).

11. The air conditioner of any one of claims 1 to 10, wherein the second outdoor unit (200) comprises a blower fan (230) configured to move air in the second casing (210) to the discharge opening (226a),
wherein the outdoor heat exchanger (240) is placed adjacent to the intake opening (221a), and the blower fan (230) is placed above the outdoor heat exchanger (240).

12. The air conditioner of claim 11, wherein the second casing (210) comprises:
a second base (212) covering a bottom of the second casing (210);
a second peripheral panel (222) placed vertically above the second base (212) to cover a side of the second casing (210) and having the intake opening (221a); and
a second upper panel (226) placed over the second peripheral panel (222) and having the discharge opening (226a),
the second outdoor unit (200) comprising:
an oil separator (244) placed inside the second casing (210) and configured to separate oil from the refrigerant discharged from the compressor (150); and
an accumulator (246) placed inside the second casing (210) and configured to supply vapor refrigerant to the compressor (150),
wherein the accumulator (246) and the oil separator (244) are fixed to the second base (212).

13. The air conditioner of claim 12,
wherein the second outdoor unit (200) further comprises a second control box (256) placed adjacent to the second service panel (223), for regulating the operation of the water pump (238) or blower fan (230).

14. The air conditioner of claim 13, wherein the second control box (256) is fixed to an upper portion of the second service panel (223).

## Patentansprüche

1. Klimaanlage, umfassend:
eine erste Außenraumeinheit (100) mit einem Motor (140), der durch Verbrennung eines gasförmigen Brennstoffs betrieben wird, einem Kompressor (150), der über einen Riemen (152) mit dem Motor (150) verbunden ist, um Kältemittel zu komprimieren, und einem ersten Gehäuse (110), das nach außen gerichtet ist und einen Raum bildet, in dem der Motor (140) und der Kompressor (150) angeordnet sind;
eine Innenraumeinheit mit einem Innenraumwärmetauscher zum Übertragen von Wärme zwischen der Luft in einem Innenraum und dem vom Kompressor (150) abgegebenen Kältemittel;
eine zweite Außenraumeinheit (200) mit einem Außenraumwärmetauscher (240), der Wärme zwischen Außenluft und dem vom Kompressor (150) abgegebenen Kältemittel überträgt, einem Umschaltventil (242), das dazu ausgelegt ist, das vom Kompressor (150) abgegebene Kältemittel zum Außenraumwärmetauscher (240) oder zum Innenraumwärmetauscher zu leiten, und mit einem zweiten Gehäuse (210), das nach außen gerichtet ist und einen Raum bildet, in dem der Außenraumwärmetauscher (240) und das Umschaltventil (242) angeordnet sind;
ein erstes Kältemittelrohr (310), das den Kompressor (150) und das Umschaltventil (242) verbindet;
ein Wasserrohr (410), das mit dem Motor (140) verbunden ist; und
ein zweites Kältemittelrohr (320), das das Umschaltventil (242) und den Innenraumwärmetauscher verbindet,
wobei die zweite Außenraumeinheit (200) von der ersten Außenraumeinheit (100) beabstandet ist;
und das erste Kältemittelrohr (310), das Wasserrohr (410) und das zweite Kältemittelrohr (320) zur Außenseite der ersten Außenraumeinheit (100) und der zweiten Außenraumeinheit (200) geführt sind,
wobei das erste Gehäuse (110) eine Vielzahl von ersten Umfangsplatten (122) umfasst, die um vier Seiten des ersten Gehäuses (110) herum angeordnet sind,
wobei das zweite Gehäuse (210) eine Vielzahl von zweiten Umfangsplatten (222) umfasst, die um vier Seiten des zweiten Gehäuses (210) herum angeordnet sind,
wobei das erste Kältemittelrohr (310) und das Wasserrohr (410) mindestens einen gebogenen Abschnitt aufweisen,
**dadurch gekennzeichnet, dass**
die Vielzahl von ersten Umfangsplatten (122) eine erste Wartungsplatte (123) enthält, an der ein erster Verbinder (124) angeordnet ist, wobei das erste Kältemittelrohr (310) und das Wasserrohr (410) mit dem ersten Verbinder (124) verbunden sind, and
die Vielzahl von zweiten Umfangsplatten eine zweite Wartungsplatte (223) enthält, an der ein zweiter Verbinder (222a) angeordnet ist, wobei das zweite Kältemittelrohr (320) und das Wasserrohr (410) mit dem zweiten Verbinder (222a) verbunden sind.

2. Klimaanlage nach Anspruch 1, wobei die Länge des ersten Kältemittelrohrs (310), das zur Außenseite der ersten Außenraumeinheit (100) und der zweiten Außenraumeinheit (200) geführt ist, gleich oder größer ist als die Länge des Wasserrohrs (410), das zur Außenseite der ersten Außenraumeinheit (100) und der zweiten Außenraumeinheit (200) geführt ist.

3. Klimaanlage nach Anspruch 1 oder 2, wobei die Länge des ersten Kältemittelrohrs (310), das zur Außenseite der ersten Außenraumeinheit (100) und der zweiten Außenraumeinheit (200) geführt ist, geringer ist als die Länge des zweiten Kältemittelrohrs (320), das zur Außenseite der ersten Außenraumeinheit (100) und der zweiten Außenraumeinheit (200) geführt ist.

4. Klimaanlage nach einem der Ansprüche 1 bis 3, ferner umfassend eine Wasserpumpe (238), die in der ersten Außenraumeinheit (100) oder der zweiten Außenraumeinheit (200) angeordnet und dazu ausgelegt ist, dem Motor (140) Wasser zuzuführen.

5. Klimaanlage nach Anspruch 4, wobei die zweite Außenraumeinheit (200) umfasst:
einen Wärmestrahler (250), der dazu ausgelegt ist, Wärme zwischen der Außenluft und dem von der Wasserpumpe (238) zugeführten Wasser zu übertragen;
einen Plattenwärmetauscher (248), der dazu ausgelegt ist, Wärme zwischen dem Kältemittel und dem von der Wasserpumpe (238) zugeführten Wasser zu übertragen; und
ein Wasserventil (252), das dazu ausgelegt ist, das von der Wasserpumpe (238) zugeführte Wasser zu dem Wärmestrahler (250) oder dem Plattenwärmetauscher (248) zu leiten.

6. Klimaanlage nach einem der Ansprüche 1 bis 5, wobei das erste Gehäuse (110) umfasst:
eine erste Basis (112), die die Unterseite des ersten Gehäuses (110) abdeckt;
eine erste Umfangsplatte (122), die oberhalb der ersten Basis (112) angeordnet ist und eine Seite des ersten Gehäuses (110) abdeckt; und
eine erste obere Platte (126), die über der ersten Umfangsplatte (122) angeordnet ist und eine Auslassöffnung (128) aufweist, und
wobei die erste Außenraumeinheit (100) umfasst:
einen Motorrahmen (144), an dem der Motor (140) und der Kompressor (150) festgelegt sind; und
einen Dämpfer (146), der zwischen dem Motorrahmen (144) und der ersten Basis (112) angeordnet ist, um durch den Motor (140) verursachte Vibrationen zu vermindern.

7. Klimaanlage nach Anspruch 6, wobei die erste Basis (112) umfasst:
eine erste Basisplatte (116);
einen ersten Basisträger (118), der unterhalb der ersten Basisplatte (116) angeordnet ist, um die erste Basisplatte (116) in einem Abstand über dem Boden anzuordnen; und
einen ersten Basisrahmen (120), der oben auf der ersten Basisplatte (116) angeordnet ist, wobei der Dämpfer (146) an dem ersten Basisrahmen (120) in Stellung festgelegt ist.

8. Klimaanlage nach Anspruch 7, wobei der erste Basisrahmen (120) einen im Wesentlichen Π-förmigen Querschnitt aufweist, wobei zwei gegenüberliegende Kanten davon an der ersten Basisplatte (116) festgelegt sind.

9. Klimaanlage nach einem der Ansprüche 6 bis 8, wobei die erste Außenraumeinheit (100) ferner einen ersten Steuerkasten (180) umfasst, der angrenzend an die erste Wartungsplatte (123) angeordnet ist, um den Betrieb des Motors (140) bzw. des Kompressors (150) zu regeln.

10. Klimaanlage nach Anspruch 9, wobei der erste Steuerkasten (180) an einem oberen Abschnitt der ersten Wartungsplatte (123) so befestigt ist, dass er von dem Motor (140) beabstandet ist.

11. Klimaanlage nach einem der Ansprüche 1 bis 10, wobei die zweite Außenraumeinheit (200) ein Gebläse (230) umfasst, das dazu ausgelegt ist, Luft in dem zweiten Gehäuse (210) zu der Auslassöffnung (226a) zu bewegen,
wobei der Außenraumwärmetauscher (240) angrenzend an die Einlassöffnung (221a) angeordnet ist und das Gebläse (230) oberhalb des Außenraumwärmetauschers (240) angeordnet ist.

12. Klimaanlage nach Anspruch 11, wobei das zweite Gehäuse (210) umfasst:
eine zweite Basis (212), die eine Unterseite des zweiten Gehäuses (210) abdeckt;
eine zweite Umfangsplatte (222), die vertikal oberhalb der zweiten Basis (212) angeordnet ist, um eine Seite des zweiten Gehäuses (210) abzudecken, und die die Einlassöffnung (221a) aufweist; und
eine zweite obere Platte (226), die oberhalb der zweiten Umfangsplatte (222) angeordnet ist und die Auslassöffnung (226a) aufweist,
wobei die zweite Außenraumeinheit (200) umfasst:
einen Ölabscheider (244), der innerhalb des zweiten Gehäuses (210) angeordnet und dazu ausgelegt ist, Öl von dem von dem Kompressor (150) abgegebenen Kältemittel abzuscheiden; und
einen Speicher (246), der innerhalb des zweiten Gehäuses (210) angeordnet und dazu ausgelegt ist, dem Kompressor (150) dampfförmiges Kältemittel zuzuführen,
wobei der Speicher (246) und der Ölabscheider (244) an der zweiten Basis (212) befestigt sind.

13. Klimaanlage nach Anspruch 12, wobei die zweite Außenraumeinheit (200) ferner einen zweiten Steuerkasten (256) umfasst, der angrenzend an die zweite Wartungsplatte (223) angeordnet ist, um den Betrieb der Wasserpumpe (238) bzw. des Gebläses (230) zu regeln.

14. Klimaanlage nach Anspruch 13, wobei der zweite Steuerkasten (256) an einem oberen Abschnitt der zweiten Wartungsplatte (223) befestigt ist.

## Revendications

1. Climatiseur comprenant :
une première unité extérieure (100) comportant un moteur (140) actionné par la combustion d'un combustible gazeux, un compresseur (150) relié au moteur (150) par une courroie (152) pour compresser du réfrigérant, et un premier boîtier (110) exposé à l'extérieur et fournissant un espace dans lequel le moteur (140) et le compresseur (150) sont placés ;
une unité intérieure comportant un échangeur de chaleur intérieur pour transférer de la chaleur entre l'air dans un espace intérieur et le réfrigérant évacué du compresseur (150) ;
une deuxième unité extérieure (200) comportant un échangeur de chaleur extérieur (240) qui transfère de la chaleur entre l'air extérieur et le réfrigérant évacué du compresseur (150), et une soupape de commutation (242) configurée pour envoyer le réfrigérant évacué du compresseur (150) à l'échangeur de chaleur extérieur (240) ou à l'échangeur de chaleur intérieur, et un deuxième boîtier (210) exposé à l'extérieur et fournissant un espace dans lequel l'échangeur de chaleur extérieur (240) et la soupape de commutation (242) sont placés ;
un premier tube de réfrigérant (310) qui relie le compresseur (150) et la soupape de commutation (242) ;
un tube d'eau (410) relié au moteur (140) ; et
un deuxième tube de réfrigérant (320) qui relie la soupape de commutation (242) et l'échangeur de chaleur intérieur,
dans lequel la deuxième unité extérieure (200) est espacée de la première unité intérieure (100) ;
et
le premier tube de réfrigérant (310), le tube d'eau (410) et le deuxième tube de réfrigérant (320) sont exposés à l'extérieur de la première unité extérieure (100) et de la deuxième unité extérieure (200),
dans lequel le premier boîtier (110) comprend une pluralité de premiers panneaux périphériques (122) placés autour de quatre côtés du premier boîtier (110),
dans lequel le deuxième boîtier (210) comprend une pluralité de deuxièmes panneaux périphériques (222) placés autour de quatre côtés du deuxième boîtier (210),
dans lequel le premier tube de réfrigérant (310) et le tube d'eau (410) présentent au moins une partie de flexion,
**caractérisé en ce que**
la pluralité de premiers panneaux périphériques (122) comporte un premier panneau de service (123) où un premier connecteur (124) est placé, le premier tube de réfrigérant (310) et le tube d'eau (410) étant reliés au premier connecteur (124), et
la pluralité de deuxièmes panneaux périphériques comporte un deuxième panneau de service (223), où un deuxième connecteur (222a) est placé, le deuxième tube de réfrigérant (320) et le tube d'eau (410) étant reliés au deuxième connecteur (222a).

2. Climatiseur selon la revendication 1, dans lequel la longueur du premier tube de réfrigérant (310) exposé à l'extérieur de la première unité extérieure (100) et de la deuxième unité extérieure (200) est supérieure ou égale à la longueur du tube d'eau (410) exposé à l'extérieur de la première unité extérieure (100) et de la deuxième unité extérieure (200).

3. Climatiseur selon la revendication 1 ou 2, dans lequel la longueur du premier tube de réfrigérant (310) exposé à l'extérieur de la première unité extérieure (100) et de la deuxième unité extérieure (200) est inférieure à la longueur du deuxième tube de réfrigérant (320) exposé à l'extérieur de la première unité extérieure (100) et de la deuxième unité extérieure (200).

4. Climatiseur selon l'une quelconque des revendications 1 à 3, comprenant en outre une pompe à eau (238) qui est placée dans la première unité extérieure (100) ou la deuxième unité extérieure (200) et qui est configurée pour fournir de l'eau au moteur (140).

5. Climatiseur selon la revendication 4, dans lequel la deuxième unité extérieure (200) comprend :
un radiateur thermique (250) configuré pour transférer de la chaleur entre l'air extérieur et l'eau fournie par la pompe à eau (238) ;
un échangeur de chaleur à plaques (248) configuré pour transférer de la chaleur entre le réfrigérant et l'eau fournie par la pompe à eau (238) ; et
une soupape d'eau (252) configurée pour envoyer de l'eau fournie par la pompe à eau (238) au radiateur de chaleur (250) ou à l'échangeur de chaleur à plaques (248).

6. Climatiseur selon l'une quelconque des revendications 1 à 5, dans lequel le premier boîtier (110) comprend :
une première base (112) recouvrant le fond du premier boîtier (110) ;
un premier panneau périphérique (122) placé au-dessus de la première base (112) et recouvrant un côté du premier boîtier (110) ; et
un premier panneau supérieur (126) placé sur le premier panneau périphérique (122) et présentant une ouverture d'échappement (128), et
la première unité extérieure (100) comprend :
un châssis de moteur (144), auquel sont fixés le moteur (140) et le compresseur (150) ; et
un amortisseur (146) qui est disposé entre le châssis de moteur (144) et la première base (112) pour réduire les vibrations causées par le moteur (140).

7. Climatiseur selon la revendication 6, dans lequel la première base (112) comprend :
un premier panneau de base (116) ;
un premier support de base (118) placé sous le premier panneau de base (116), pour placer le premier panneau de base (116) à une certaine distance au-dessus du sol ; et
un premier châssis de base (120) placé sur le dessus du premier panneau de base (116), dans lequel l'amortisseur (146) est fixé en place sur le premier châssis de base (120).

8. Climatiseur selon la revendication 7, dans lequel le premier châssis de base (120) présente une section transversale sensiblement en forme de Π, dont deux bords opposés sont fixés au premier panneau de base (116).

9. Climatiseur selon l'une quelconque des revendications 6 à 8,
dans lequel la première unité extérieure (100) comprend en outre une première boîte de commande (180) placée de manière adjacente au premier panneau de service (123), pour réguler le fonctionnement du moteur (140) ou du compresseur (150).

10. Climatiseur selon la revendication 9, dans lequel la première boîte de commande (180) est bloquée sur une partie supérieure du premier panneau de service (123) de manière à être espacée du moteur (140).

11. Climatiseur selon l'une quelconque des revendications 1 à 10, dans lequel la deuxième unité extérieure (200) comprend un ventilateur soufflant (230) configuré pour déplacer de l'air dans le deuxième boîtier (210) vers l'ouverture d'évacuation (226a),
dans lequel l'échangeur de chaleur extérieur (240) est placé de manière adjacente à l'ouverture d'admission (221a), et le ventilateur soufflant (230) est placé au-dessus de l'échangeur de chaleur extérieur (240).

12. Climatiseur selon la revendication 11, dans lequel le deuxième boîtier (210) comprend :
une deuxième base (212) recouvrant le fond du deuxième boîtier (210) ;
un deuxième panneau périphérique (222) placé verticalement au-dessus de la deuxième base (212) pour recouvrir un côté du deuxième boîtier (210) et présentant l'ouverture d'admission (221a) ; et
un deuxième panneau supérieur (226) placé au-dessus du deuxième panneau périphérique (222) et présentant l'ouverture d'évacuation (226a),
la deuxième unité extérieure (200) comprend :
un séparateur d'huile (244) placé à l'intérieur du deuxième boîtier (210) et configuré pour séparer l'huile du réfrigérant évacué du compresseur (150) ; et
un accumulateur (246) placé à l'intérieur du deuxième boîtier (210) et configuré pour fournir du réfrigérant sous forme de vapeur au compresseur (150),
dans lequel l'accumulateur (246) et le séparateur d'huile (244) sont bloqués sur la deuxième base (212).

13. Climatiseur selon la revendication 12,
dans lequel la deuxième unité extérieure (200) comprend en outre une deuxième boîte de commande (256) placée de manière adjacente au deuxième panneau de service (223) pour réguler le fonctionnement de la pompe à eau (238) ou du ventilateur soufflant (230).

14. Climatiseur selon la revendication 13, dans lequel la deuxième boîte de commande (256) est bloquée sur une partie supérieure du deuxième panneau de service (223).
